# EUROPEAN PATENT SPECIFICATION

(11) **EP 3 494 783 B1**
(45) Date of publication and mention of the grant of the patent: **17.02.2021**
(21) Application number: 18210544.5
(22) Date of filing: 05.12.2018
(51) Int. Cl.: E01H 1/12

(54) **WASTE COLLECTING DEVICE**
ABFALLSAMMELVORRICHTUNG
DISPOSITIF DE COLLECTE DE DÉCHETS

(30) Priority: 05.12.2017 GB 201720283
(43) Date of publication of application: 12.06.2019
(73) Proprietor: Chopping, Simon Carl, North Tuddenham Norfolk NR20 3DQ (GB); Chopping, Belinda, North Tuddenham Norfolk NR20 3DQ (GB)
(72) Inventor: Chopping, Simon Carl, North Tuddenham Norfolk NR20 3DQ (GB); Chopping, Belinda, North Tuddenham Norfolk NR20 3DQ (GB)
(74) Representative: ip21 Ltd

(56) References cited:
- WO-A1-2014/165909
- GB-A- 1 545 359
- GB-A- 2 304 544
- US-A- 3 160 186
- US-A1- 2005 006 914
- US-A1- 2006 054 107
- US-A1- 2008 101 731

## Description

### Technical Field

The invention relates to a device which enables pet owners to collect and dispose of pet waste in a hygienically and environmentally friendly manner.

### Background

There are currently over 100 million dog owners in the world and dog waste is an environmental concern as well as a concern when considering human contamination. Existing methods of pet animal waste collection involve the use of a container or bag usually made of plastic. Dog waste is often collected by owners using plastic bags, and the waste is then held within the bag before the bag containing the waste is thrown away into the bin. This waste is collected via general public waste bins or household bins and taken to a commercial waste disposal dumping ground. This leads to the ever-increasing level of waste disposed into waste dumps/collections. Both on environmental and hygienic levels this is unsustainable.

There is therefore a compounding need for more environmentally sound methods for pet waste collection, with a view to eliminate both plastic and hygienic waste. The breakdown of plastic is a current serious environmental concern with many campaigners urging the reduction of plastic. Furthermore, there are health concerns for those working in the waste disposal environment, since pet waste presents a potentially severe health risk. Accordingly, there is a need to overcome these concerns to provide a safe environmentally sound process in which to collect and dispose of pet animal waste.

WO 2014/165909 A1, US 2005/006914 A1, GB 2304544 A, US 2008/101731 A1, GB 1545359 A, US 2006/054107 A1 each disclose known devices for pet waste collection.

### Summary of the Invention

The above need is addressed with the invention according to claim 1 and its dependent claims.

In a first broad independent aspect, the invention provides an animal waste collecting device comprising a disposable container, a resilient sleeve for retaining the disposable container, and a releasable attachment means for releasably attaching the disposable container with respect to the resilient sleeve; the resilient sleeve comprising at least two oppositely disposed walls; the resilient sleeve and the disposable container having at least one openable end which is openable by compressing the device to reveal an opening for insertion of animal waste into the disposable container; the resilient sleeve tending to close onto the animal waste, when compression is no longer applied, in order to retain both the animal waste and the disposable container with respect to the sleeve; wherein the releasable attachment means are configured to allow the disposable container and its contents to be released from the collecting device.

The sleeve comprises two openings; one located at a first extremity of the collecting device through which, in use, animal waste may be inserted into the disposable container; and a second opening located at the opposite extremity to the first extremity, through which the disposable container with animal waste, if any, may exit the device.

The releasable attachment means comprises a flexible band which releasably secures at least a portion of the disposable container to the resilient sleeve.

The oppositely disposed walls form a substantially flat sleeve, when no compression is applied, the walls being hinged along a first lateral edge and being releasably secured along a second lateral edge. This is particularly advantageous to allow the sleeve to be opened flat for cleaning and for insertion of the disposable container.

In a comparative example, there is provided a container comprising a sleeve made from biodegradable material, the sleeve having an open end for receiving the pet waste and a closed end at which the biodegradable material is crimped; wherein the biodegradable material is folded to form a flap at the open end; the flap being sized and shaped to be secured by the releasable attachment means of a waste collecting device in accordance with any of the aspects presented herewith.

In a further comparative example, there is provided a method of forming a disposable container for animal waste, the method comprising the steps of:
providing a sheet of biodegradable material;
folding the sheet of biodegradable material to form a sleeve;
crimping the biodegradable material at one end of the sleeve;
securing the biodegradable material at said end of the sleeve to close that end; and
securing the biodegradable material along at least one side of the sleeve, such that the other end of the sleeve is open to receive the pet waste.

The method may further comprise the step of folding the biodegradable material to form a flap at the open end of the sleeve.

In a further example, there is provided a waste collecting device comprising a resilient sleeve for retaining a disposable container, the resilient sleeve having an end which opens to release the disposable container from the resilient sleeve when the resilient sleeve is compressed.

The waste collecting device is also referred to here as a waste collector and it is suitable for collecting pet animal waste, such as dog waste. It may be hand-held by the pet owner who can compress or squeeze the sleeve by hand to thereby deform its end opening to allow either waste to be collected in the disposable container inside the sleeve or for the disposable container to fall out of the sleeve. By 'opens' we mean increasing the area of the open end to allow the disposable container to pass through. In other words, the open end may have an aperture when not operated on, although such an aperture is small enough so that the disposable container cannot fall out through this aperture.

The resilient sleeve must have reasonable rigidity to allow the operator to deform (bend) the device for the end of the sleeve to open. By a 'sleeve' we mean an open ended flat or tubular packaging.

Preferably, therefore when the resilient sleeve is compressed, the open end allows for waste to be collected inside the disposable container retained inside the resilient sleeve. The other end of the sleeve may be closed or may have a similar opening to that of the first end. In preferred embodiments, the sleeve has a first end which allows for collection of waste and a second end which allows the disposable container to fall out of the sleeve. That is, the sleeve has an inlet and an outlet, both of which are opened by the user compressing the resilient sleeve. Preferably, the open end closes when the resilient sleeve is no longer compressed. By 'closes', we mean reducing the opening area at least to a level whereby the disposable container is retained inside the sleeve.

Accordingly, waste is collected within the waste collector which advantageously allows for safe disposal of the waste into a household or public sewage system (i.e. home or public toilets). This eliminates the problems of both plastic waste and hygiene, providing a safe and environmentally sound process in which to collect and dispose of pet animal waste.

Preferably, the disposable container is a biodegradable container or bag. The use of a biodegradable container such as a tissue bag may allow for direct disposal of the waste into the sewage system, in contrast to using plastic bags. This allows a user to dispose of the waste in an environmentally friendly and hygienic manner (i.e. disposing of the full bag in the toilet or any other waste bin as appropriate without making contact with the waste).

By a 'biodegradable' material we mean, in certain embodiments, a material which can be consumed by microorganisms in a relative short time, typically an organic material. In particular, the biodegradable material may be made from tissue paper or paper towel or other fibrous material of the kind employed for tea bags. For example, these materials biodegrade in their entirety in an aqueous environment within weeks. Preferably, this signifies in certain embodiments that the material degrades or fragments within less than 1 minute, less than 5 minutes, or less than 10 minutes when submerged in an aqueous environment so that at least 80% of the original disposable container is no longer an integral part of the container. Preferably, at least 90% of the material is no longer present as an integral part of the container after 1 month when submerged in an aqueous environment. These levels are deemed equivalent to most water-soluble tissues used in other domestic applications.

Preferably, the resilient sleeve comprises an inner sleeve element, an outer sleeve element and at least one resilient sheet located between the inner and outer sleeve elements. The inner and outer sleeve elements may be fabric sheets or membranes. This structure allows for a resilient sheet to be sandwiched within an inner lining and an outer lining of the sleeve, increasing durability and flexibility of manufacture.

The resilient sheet may be a plastic membrane which forms a mechanism that allows the container to be deformed to open the inlet, thereby allowing the waste to be deposited within the disposable container. Once the user stops applying force to the resilient sleeve (by clamping it), the resilient sheet returns to its original shape, closing the outlet. Once closed, the resilient sheet provides the required force to maintain the container closed and thereby hold the dog waste inside the biodegradable bag in place.

In some examples, at least one resilient sheet is a ridged or a rigid plastic wall. This enables retaining the disposable container within the sleeve.

Preferably, the inner sleeve element comprises waterproof fabric. This may be a piece of fabric which is water proof to allow the container to be easily cleaned. Preferably, the inner sleeve membrane comprises vinyl.

In other examples, the resilient sleeve further comprises at least one magnetic element such as a magnetic strip. The use of magnetic elements for example located within the inner and outer lining of the sleeve can ensure that the waste is kept within the disposable container inside the sleeve before its release into the toilet.

Preferably, the device comprises at least one attachment means provided on an outer surface of the resilient sleeve. The attachment means may be a hook or holdall for example. The use of hooks or holdall on the side of the device allows for ease of transportation and carriage. The use of hoops attached to the device on the external surface of the sleeve allows for carrying a spade or scoop for example, in order to collect the dog waste without direct handling of the waste.

In a further example, there is provided a disposable container for use in a waste collecting device as described above. The disposable container facilitates waste disposal.

In a further example, there is provided a resilient sleeve for a waste collecting device as described above. The resilient sleeve enables collection and disposal of the waste in a quick and convenient manner.

In a further example, there is provided a disposable container for pet waste, the container comprising a sleeve made from biodegradable fabric, the sleeve having an open end for receiving the pet waste and a closed end at which the biodegradable fabric is crimped.

By 'crimped' we mean compressed together into small folds or ridges to close that end of the sleeve and retain the waste. Preferably, the crimped material is stitched or glued together with a water-soluble glue. The use of a disposable container such as a perishable tissue bag that can be incorporated into the sewage system, eliminates the need for using plastic bags whilst enabling collection and disposal of waste without the user contacting the waste.

Preferably, the biodegradable fabric (biodegradable material) is folded to form a flap at the open end. This enables the disposable container to be attached to the resilient sleeve of a collecting device as described above.

In a further comparative example, there is provided a method of forming a disposable container for pet waste, the method comprising the steps of:
providing a sheet of biodegradable fabric;
folding the sheet of biodegradable fabric to form a sleeve;
crimping the biodegradable fabric at one end of the sleeve;
securing the biodegradable fabric at said end of the sleeve to close that end; and
securing the biodegradable fabric along at least one side of the sleeve, such that
the other end of the sleeve is open.

It will be appreciated that a single sheet may be rolled to form a sleeve, the sleeve being stitched/glued along one side (and at the crimped, closed end), or alternatively, two sheets may be stitched/glued together along two sides (and at the crimped, closed end).

Alternatively, the sheets may be appropriately folded to form a pocket without the need for any separate fasteners whatsoever.

Fabric may refer to any suitable material, including paper for example. This method enables the construction of a disposable container from a suitable material such as tissue paper.

The method may include the step of folding the biodegradable fabric to form a flap around the open end of the sleeve. The flap enables the disposable container to be attached to the resilient sleeve of a collecting device as described above.

Preferably, the biodegradable fabric is a single or double-sided tissue paper. This material is advantageously degradable and easy to use to form the disposable container. In a further example, the biodegradable fabric may be of the kind used for tea bags or the like.

### Brief Description of Figures

Aspects of the invention will now be described with reference to the accompanying drawing in which:
Figure 1 is a schematic view of the components (layers) of a sleeve for the waste collector;
Figure 2 shows the inner and outer linings of the sleeve;
Figure 3 shows the internal plastic lining of the waste collector;
Figures 4A and 4B show schematic views of the waste collector from the top, uncompressed;
Figure 5 shows a perspective view of the top of the sleeve, when the sleeve is clamped by the user to open it;
Figure 6 shows a biodegradable bag used inside the waste collector;
Figure 7 shows perspective views of the waste collector;
Figure 8 shows a sleeve with magnetic strips;
Figure 9 shows the internal vinyl fabric sheet of a sleeve with magnetic strips;
Figure 10 shows the internal plastic lining of a sleeve with magnetic strips;
Figure 11 shows a perspective view of the waste collector with magnetic strips, when the sleeve is clamped by the user to open it;
Figure 12 shows another example of a biodegradable bag;
Figures 13A, 13B show external views of the waste collector with magnetic strips;
Figure 14 shows a schematic plan view of a sleeve in its unfolded configuration;

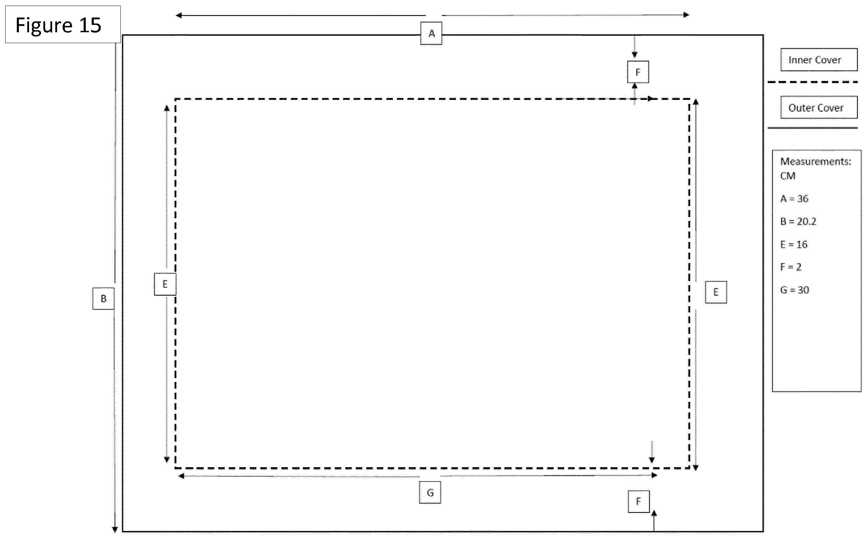

Figure 15 shows a schematic plan view of the outer and inner covers; and
Figure 16 shows a perspective view of the waster collector in accordance with a further embodiment.

### Detailed Description

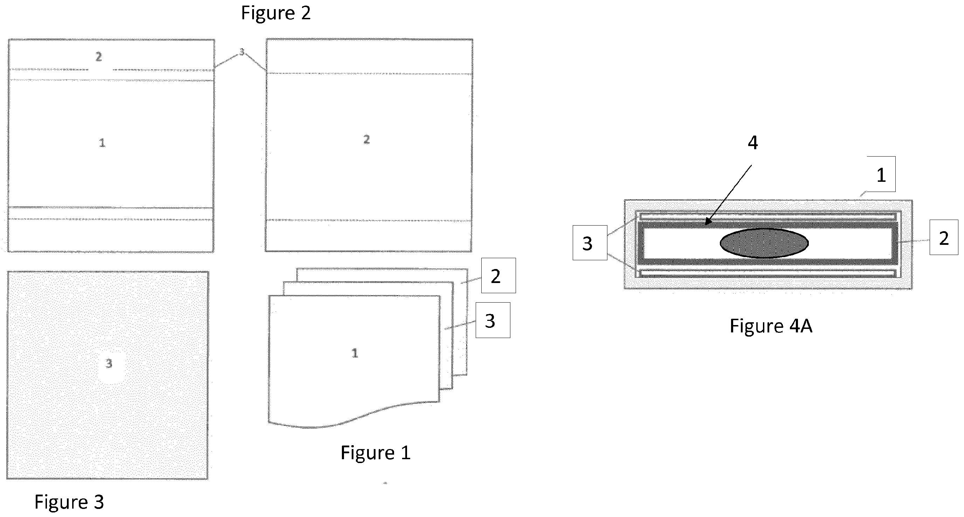

With reference to Figures 1 to 4A, the waste collector is formed as a sleeve, having an outer and inner lining 1,2. Positioned between the two linings (walls) 1,2 is at least one resilient sheet 3, in this example two plastic walls 3, preferably with ridged inner surfaces. Inside the sleeve, the collector may contain a disposable container such as a biodegradable bag 4 which may be made of tissue paper to collect the waste in. The biodegradable bag 4 is held in place by the two relatively rigid plastic walls 3 of the collector. When pressure is applied to the side of the collector, the walls 3 change shape allowing the opening between the walls to expand. This opening may be at either end of the sleeve. This allows the contents of the container (the biodegradable bag with waste inside) to fall out of the collector without the need of the user to touch any part of such contents.

With reference to Figures 1 and 2, the collector has an outer sheet material 1, such as a cloth material (outer lining) overlapped at the top and bottom by an internal fabric sheet 2 (inner lining) which is preferably a water-resistant material such as vinyl. Positioned internally between the two walls 1,2 formed by the outer and inner lining, is a resilient sheet 3. As shown in the example of Figure 3, two rigid plastic walls 3 may be used to enable clamping of the disposable container 4 to be collected inside the collector.

Figure 2 shows the internal vinyl fabric sheet 2 lining the outer fabric sheet 1. The internal fabric sheet 2 is preferably a washable material which is used to facilitate ease of cleaning. This fabric sheet 2 is located internally to the container, with flaps extending both over the top and bottom of the sleeve and may be secured to the outer lining of the sleeve via a stitched lining for example.

Figure 3 shows the internal plastic lining 3 which acts as a clamping mechanism. It will be appreciated that any suitably resilient material may be used. Plastic has a reasonable rigidity allowing the user to bend the sleeve open in order to allow the waste to be collected into the tissue bag 4 inside the sleeve.

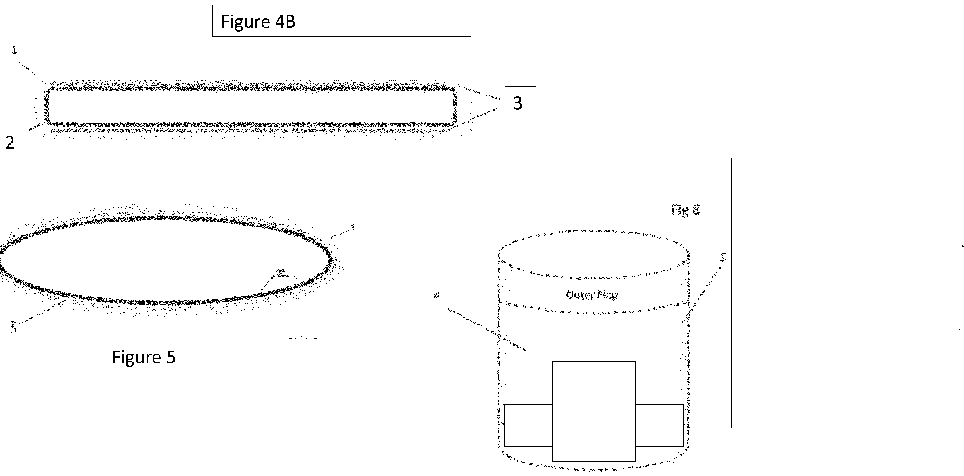

Figures 4A and 4B each shows internal views of the device from the top (in cross-section).

In Figure 4A, the device contains the disposable container 4, whilst in Figure 4B, the disposable container has been released from the sleeve. It will be appreciated that the cross-section of the sleeve may have any suitable shape.

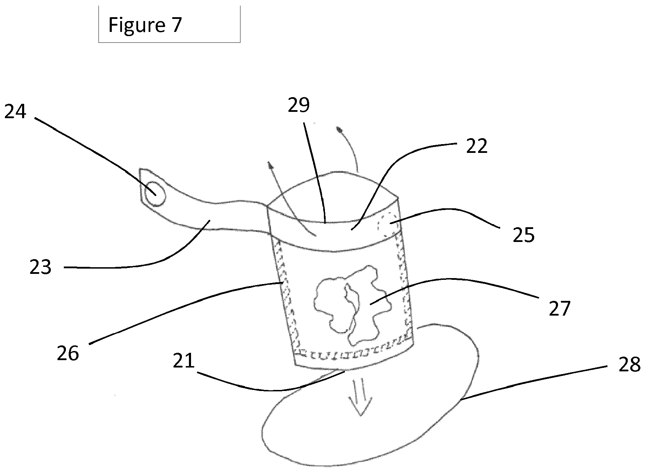

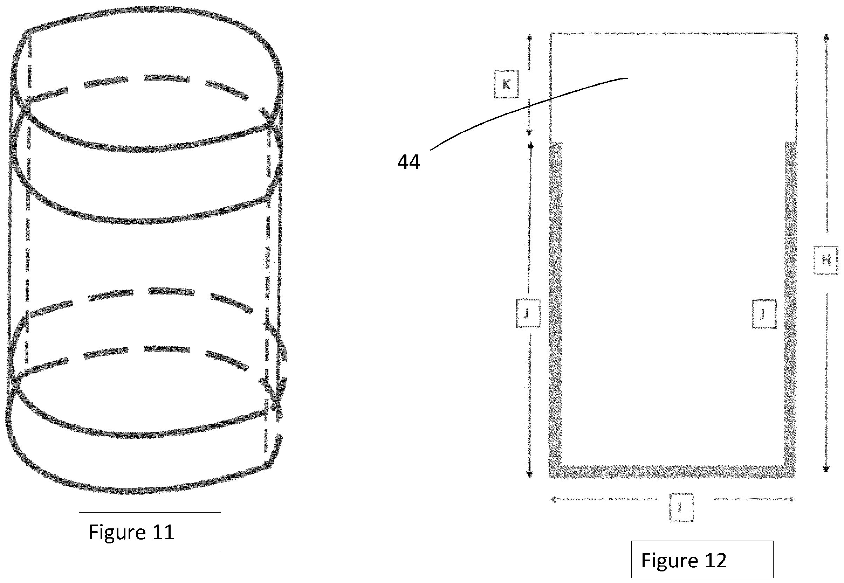

Figure 5 shows a perspective view of the top of the sleeve, when the collector is clamped by the user to open the container and allow waste to be collected inside the container or allow for release of the disposable container. In preferred embodiments, the overall shape of the collector therefore is a sleeve which has two openings, an inlet and an outlet to respectively collect the waste in the biodegradable bag 4 and dispose of the waste safely and hygienically (see also Figures 7 and 11).

Figure 6 shows a biodegradable bag 4, in this example a tissue bag. The bag 4 bag is made from a single or double-sided sheet of tissue paper laid out flat and then rolled. The tissue paper is then crimped at the bottom and stitched or glued along its sides 5 at the same time. This may be performed using a suitable machine for example of the kind used to produce bags such as tea bags. Preferably, a water-soluble glue is used for environmental reasons. Using a disposable, perishable tissue bag that can be incorporated into a sewage system overcomes the need to use any form of plastic bag and is thus environmentally friendly. Bag 4 has an outer flap at the open end (top end in Figure 6) to allow the bag to be attached to the sleeve 1,2 of the device.

Figure 7 shows a perspective view of the waste collector, the bottom end 21 of which is opened to release the disposable container into a toilet such as toilet aperture 28. In this embodiment, a releasable attachment means is optionally provided to secure part of the disposable container to the sleeve. The releasable attachment means employs for example a flexible band 23 with a metal disc 24 or other suitable component which when presented to a corresponding magnet such as magnet 25 secures the upper part of the disposable container in place. This also provides an increase in robustness of the waste collector and facilitates a large area of cleanable surface. The provision of the magnet may alternatively be in the flexible band as appropriate. In the mode of use shown in the figure, the band has been released from its attachment position thus freeing the folded back upper portion 22 or portions of the disposable container which allows the container to fall through the opening with its payload or animal waste 27. In this embodiment, the upper portions are folded back portions which are optionally rectangular in shape and separated from the rest of the disposable container by a pre-determined fold line 29. The disposable container may be simply configured of two oppositely disposed sheets which are attached together or crimped about their side portions 26 and about their lower portion. Alternatively, the lower portion may also be a fold line between two portions of a single sheet. In this latter embodiment, only side portions 26 would be required for completing the container and the entire disposable container may be made as a single sheet of material which is folded and appropriately crimped. Whilst the embodiment of figure 7 shows a flexible band 23 which appears to be of a length to cover only one folded back upper portion 22, further embodiments envisage the use of a flexible band which is of sufficient length to extend around the entire perimeter of the sleeve in order to secure folded back portions 22 on both sides of the sleeve. In this configuration, a releasable attachment means may be provided in close proximity to where the flexible band protrudes from the sleeve. In further embodiments, several flexible bands such as band 23 may be provided as appropriate. The attachment means may in certain embodiments include one or more filamentary touch to close pads some of which are commonly referred to as VELCRO (registered trade mark) pads. The attachment means may in certain embodiments include press studs or magnetically attracted pads.

The device may have one or more hooks for attaching the collector to a user belt for example. Alternatively, a holdall can be used on the side of the container. The use of hooks or a holdall on the side of the unit allows for ease of transportation and carriage.

The use of hoops on the external side of the unit allows for carriage of a spade or scoop in order to collect dog waste without direct handling of the waste. In preferred embodiments, the sleeve and container are used in combination to collect or directly scoop up animal waste from the ground.

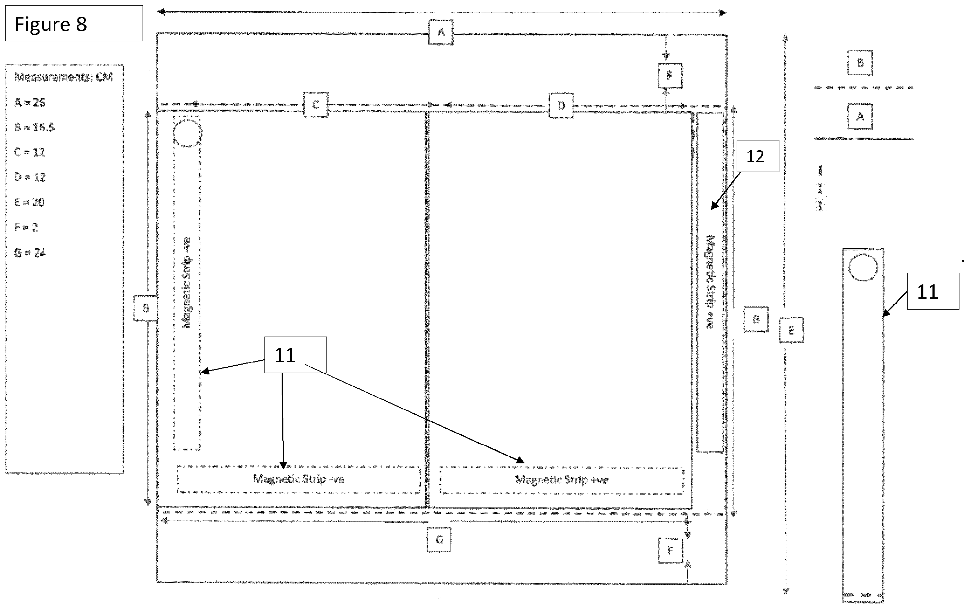

Figures 8 to 13B show an alternative waste collector, which includes magnetic strips 11. Turning first to Figure 8, the device has an outer lining (B) and inner lining (A) similar to the waste collector described above. Specifically, the sleeve of the device is made from an outer material (B) overlapped at the top and bottom by the internal vinyl fabric (A). Positioned internally between the two walls of each material are two inner plastic sheets (C, D) designed to provide the mechanism to clamp the biodegradable bag inside the collector.

Positioned onto the plastic sheet (C, D) are magnetic strips 11 which connect the outer and inner sheets (A, B). This ensures the waste is kept within the biodegradable bag before release into the toilet. A further magnetic strip 12 is positioned along the outer flap of the outer cloth material (A) which also acts as a connector to the outer wall.

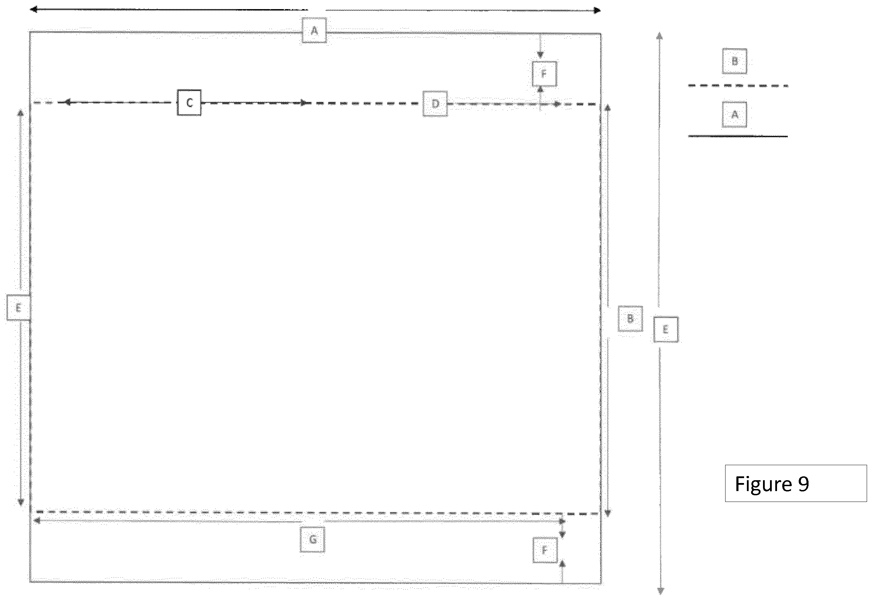

Figure 9 shows the internal vinyl fabric (A) used which facilitate ease of cleaning. This fabric (A) forms the inner lining of the collector, with flaps (F) extending both over the top and bottom of the collector, and is secured via a stitched lining.

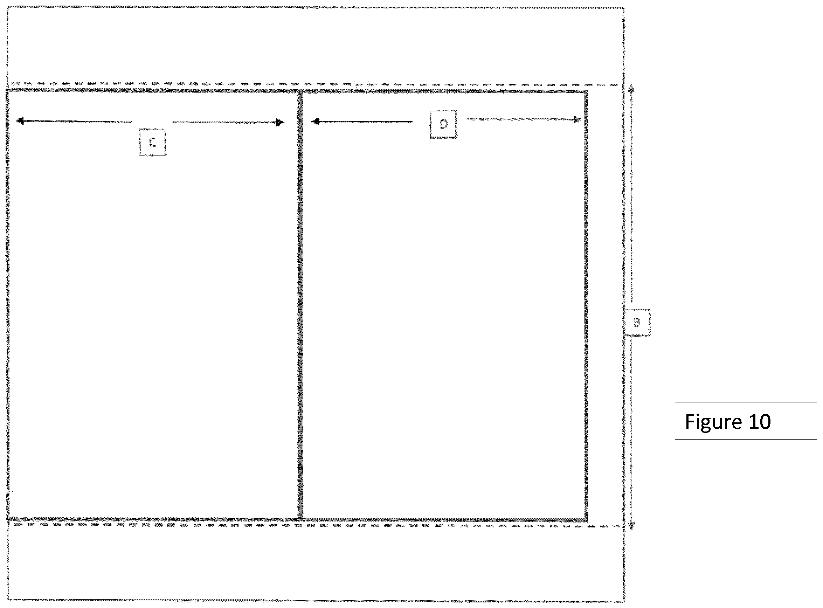

Figure 10 shows the internal plastic lining (C, D) which acts as the resilient mechanism for the sleeve. The plastic has a reasonable rigidity allowing the operator to bend the sleeve open in order to allow the dog waste to fall into the tissue bag.

Figure 11 shows a perspective view of the waste collector when it is clamped by the user to open it. The top of the sleeve may be the inlet for receiving waste and the bottom of the sleeve may be used as the outlet for disposing of the disposable collector inside the sleeve.

Figure 12 shows another example of a tissue bag, open at the top and closed at the bottom. The bag is made in a similar manner to the bag showed at Figure 6, with tissue paper being crimped at the bottom and stitched or glued along its sides (J) at the same time.

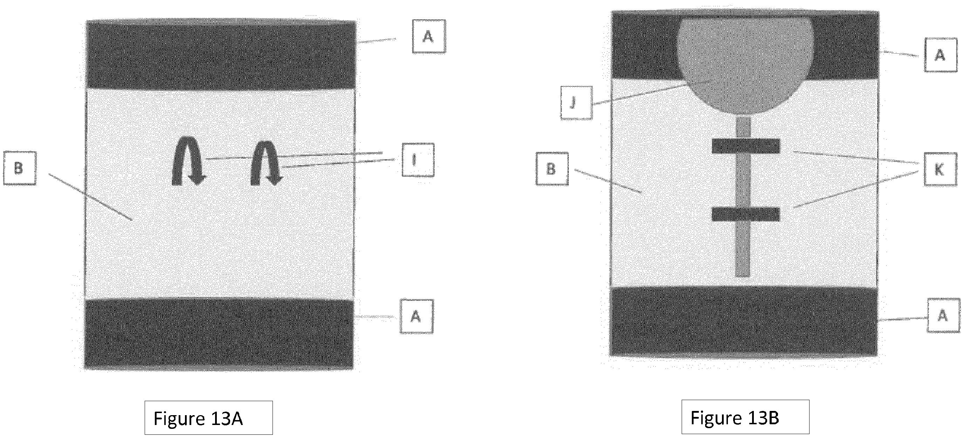

Figure 13A shows the external operation of the collector unit with two hooks (I) intended to be used for holding the unit via a belt or some other suitable form of attachment. Figure 13B shows the external use of two hoops (K) which are intended for use to hold a plastic spade (J) allowing collection of the pet waste before depositing it inside the disposable container inside the sleeve.

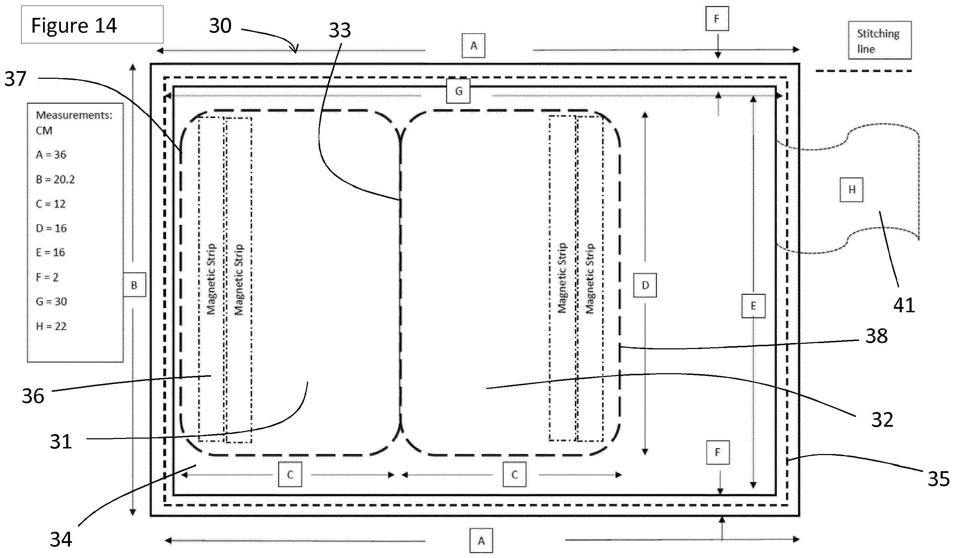

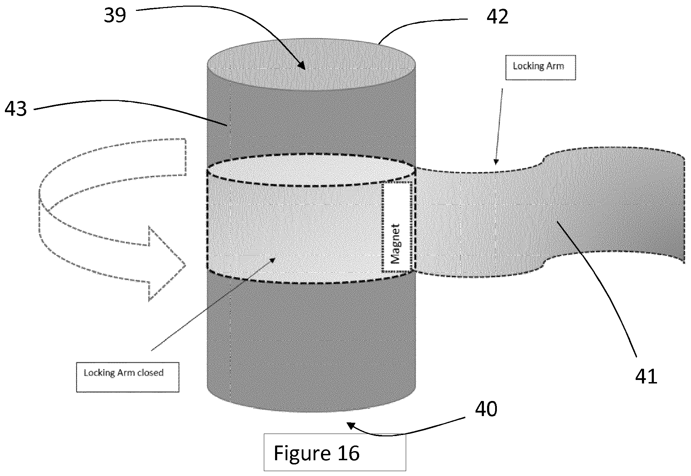

Figure 14 shows an embodiment of a sleeve 30 of an animal or pet waste collecting device. The sleeve may adopt a flat configuration which is ideal for cleaning as shown in figure 14, a closed configuration for transportation prior to collecting animal waste, or a relatively open configuration as shown in figure 16 for insertion of animal waste. In one embodiment, the sleeve comprises two relatively rigid sheets 31 and 32. The edges of the sheets are illustrated by the dashed lines; the dashed lines in question being those which are longer than those provided to illustrate the stitching line 35. The two relatively rigid sheets 31 and 32 are separated by a fold line 33. In one embodiment, the sheets are formed integrally and simply fold along the fold line. In an alternative embodiment, the sheets are separate sheets whose adjacent edges abut or are appropriately spaced. Optionally, the sheets are covered by a washable relatively flexible layer 34 or sheets which may be a vinyl layer. One such layer may be provided on either side of the rigid sheets and may then be stitched together along appropriate stitch lines such as line 35.

Sheets 31 and 32 may incorporate one or more magnetic strips such as magnetic strip 36. In one embodiment, two magnetic strips are provided along the respective outermost edges 37 and 38 of the sheets. These allow the sleeve to be closed by overlapping sheets 31 and 32. The sleeve thus operates like a booklet which may be selectively closed along its outermost edges 37 and 38. When closed, the sleeve has preferably an upper opening 39 and a lower opening 40 as shown in figure 16. The configuration of figure 16 may be obtained by applying pressure on opposite side of the booklet in order to reveal openings 39 and 40 without such pressure being applied the sleeve is relatively flat for ease of transportation.

A band or locking arm 41 projects from one of the lateral edges of the sleeve. This band is offset below the upper edge 42 of the sleeve and is of sufficient length to be wrapped around the sleeve in order to allow a portion of a disposable container when placed into the sleeve to be gripped by the band when the band is closed. Whilst this embodiment, illustrates a band, other releasable attachments means may be envisaged such as a loop and hook arrangement, a push fitment etc. The disposable container may take the form of an envelope of for example tissue like or paper like material of the kind described previously with reference to figure 12. The envelope may have two upper tabs which may be folded back against the upper edge of the sleeve and then secured under the arm. This advantageously provides a region 43 between the upper edge 42 and the band 41 which exposes surfaces of the disposable container, when the disposable container is releasably secured to the sleeve. These exposed surfaces of the disposable container may be soiled during the process of waste collection. One of the tabs may be provided in region 44 as shown in figure 12.

In a further embodiment, the disposable container may incorporate an adhesive strip in region 44 (shown in figure 12). The strip may advantageously be provided on the inside of the disposable container and allow the closure of the container once waste has been placed within it. The adhesive strip may be covered by a covering strip to allow the user to reveal the adhesive strip by removing the covering strip when appropriate.

## Claims

1. An animal waste collecting device comprising a disposable container (4), a resilient sleeve for retaining said disposable container, and a releasable attachment means (23, 24, 25) for releasably attaching said disposable container (4) with respect to said resilient sleeve; said resilient sleeve comprising at least two oppositely disposed walls (1, 2); said resilient sleeve and said disposable container having at least one openable end which is openable by compressing said device to reveal an opening (39) for insertion of animal waste into said disposable container; the resilient sleeve tending to close onto said animal waste, when compression is no longer applied, in order to retain both said animal waste and said disposable container with respect to said sleeve; wherein said releasable attachment means are configured to allow said disposable container and its contents to be released from said collecting device , wherein said sleeve comprises two openings (39, 40); one located at a first extremity of the collecting device through which, in use, animal waste may be inserted into the disposable container; and a second opening (40) ocated at the opposite extremity to the first extremity, through which the disposable container with animal waste, if any, may exit the device, **characterised in that** said releasable attachment means comprises a flexible band (23) which releasably secures at least a portion of said disposable container to said resilient sleeve, wherein said oppositely disposed walls (1, 2) form a substantially flat sleeve, when no compression is applied, said walls being hinged along a first lateral edge and being releasably secured along a second lateral edge.

2. An animal waste collecting device according to claim 1, wherein the disposable container is a biodegradable container.

3. An animal waste collecting device according to claim 1 or claim 2, wherein the resilient sleeve comprises an inner sleeve element, an outer sleeve element and at least one resilient sheet located between the inner and outer sleeve elements.

4. An animal waste collecting device according to claim 3, wherein the inner sleeve element comprises waterproof fabric.

5. An animal waste collecting device according to claim 3 or claim 4, wherein the at least one resilient sheet is a rigid plastic wall.

6. An animal waste collecting device according to any one of the preceding claims, wherein the resilient sleeve further comprises at least one magnetic element.

7. An animal waste collecting device according to any one of the preceding claims, further comprising at least one attachment means provided on an outer surface of the resilient sleeve.

## Patentansprüche

1. Eine Vorrichtung zum Sammeln von Tierabfällen, umfassend einen Einwegbehälter (4), einen elastischen Hülse zum Festhalten des Einwegbehälters und ein lösbares Befestigungsmittel (23, 24, 25) zum lösbaren Befestigen des Einwegbehälters (4) in Bezug auf die elastische Hülse; wobei die elastische Hülse mindestens zwei gegenüberliegend angeordnete Wände (1, 2) aufweist; wobei die elastische Hülse und der Einwegbehälter mindestens ein zu öffnendes Ende aufweisen, das durch Zusammendrücken der Vorrichtung geöffnet werden kann, um eine Öffnung (39) zum Einführen von tierischen Abfällen in den Einwegbehälter freizulegen; wobei die elastische Hülse dazu neigt, sich auf den tierischen Abfällen zu schliessen, wenn kein Zusammendrücken mehr angewendet wird, um sowohl die tierischen Abfälle als auch den Einwegbehälter in Bezug auf die Hülse zurückzuhalten; wobei die lösbaren Befestigungsmittel so konfiguriert sind, dass der Einwegbehälter und sein Inhalt aus der Sammelvorrichtung freigegeben werden können, wobei die Hülse zwei Öffnungen (39, 40) aufweist, von denen eine an einem ersten Ende der Sammelvorrichtung angeordnet ist, durch die im Gebrauch tierische Abfälle in den Einwegbehälter eingeführt werden können, und eine zweite Öffnung (40) die sich an der dem ersten Ende gegenüberliegenden Seite befindet, durch die der Einwegbehälter mit tierischen Abfällen eingeführt werden kann, falls vorhanden, aus der Vorrichtung austreten kann, **dadurch gekennzeichnet, dass** das lösbare Befestigungsmittel ein flexibles Band (23) umfasst, das mindestens einen Teil des Einwegbehälters lösbar an der elastischen Hülle befestigt, wobei die einander gegenüberliegenden Wände (1, 2) eine im wesentlichen flache Hülle bilden, wenn kein Druck ausgeübt wird, wobei die Wände entlang einer ersten Seitenkante gelenkig gelagert und entlang einer zweiten Seitenkante lösbar befestigt sind.

2. Vorrichtung zum Sammeln von Tierabfällen nach Anspruch 1, wobei der Einwegbehälter ein biologisch abbaubarer Behälter ist.

3. Vorrichtung zum Sammeln von Tierabfällen nach Anspruch 1 oder 2, wobei die elastische Hülse ein inneres Hülsenelement, ein äusseres Hülsenelement und mindestens eine zwischen dem inneren und dem äusseren Hülsenelement angeordnete elastische Folie umfasst.

4. Vorrichtung zum Sammeln von Tierabfällen nach Anspruch 3, wobei das innere Hülsenelement aus wasserdichtem Gewebe besteht.

5. Vorrichtung zum Sammeln von Tierabfällen nach Anspruch 3 oder Anspruch 4, wobei die mindestens eine elastische Folie eine starre Kunststoffwand ist.

6. Vorrichtung zum Sammeln von Tierabfällen nach einem der vorstehenden Ansprüche, wobei die elastische Hülse ferner mindestens ein magnetisches Element aufweist.

7. Vorrichtung zum Sammeln von Tierabfällen nach einem der vorstehenden Ansprüche, die ferner mindestens ein Befestigungsmittel aufweist, das an einer Aussenfläche der elastischen Hülse vorgesehen ist.

## Revendications

1. Un dispositif de collecte de déchets animaux comprenant un récipient jetable (4), un manchon élastique pour retenir ledit récipient jetable, et un moyen de fixation amovible (23, 24, 25) pour fixer de manière amovible ledit récipient jetable (4) par rapport audit manchon élastique ; ledit manchon élastique comprenant au moins deux parois (1, 2) disposées de manière opposée ; ledit manchon élastique et ledit récipient jetable ayant au moins une extrémité ouvrable qui peut être ouverte en comprimant ledit dispositif pour révéler une ouverture (39) pour l'insertion de déchets animaux dans ledit récipient jetable ; le manchon élastique ayant tendance à se fermer sur lesdits déchets animaux, lorsque la compression n'est plus appliquée, afin de retenir à la fois lesdits déchets animaux et ledit récipient jetable par rapport audit manchon ; dans lequel ledit moyen de fixation amovible est configuré pour permettre audit récipient jetable et à son contenu d'être libérés dudit dispositif de collecte, dans lequel ledit manchon comprend deux ouvertures (39, 40), l'une située à une première extrémité du dispositif de collecte à travers laquelle, en utilisation, les déchets animaux peuvent être insérés dans le récipient jetable, et une seconde ouverture (40) située à l'extrémité opposée à la première extrémité, à travers laquelle le récipient jetable avec les déchets animaux, s'il y en a, peut sortir du dispositif, **caractérisé en ce que** ledit moyen de fixation amovible comprend une bande flexible (23) qui fixe de manière amovible au moins une partie dudit récipient jetable audit manchon élastique, dans lequel lesdites parois (1, 2) disposées de manière opposée forment un manchon sensiblement plat, lorsqu'aucune compression n'est appliquée, lesdites parois étant articulées le long d'un premier bord latéral et étant fixées de manière amovible le long d'un second bord latéral.

2. Dispositif de collecte de déchets animaux selon la revendication 1, dans lequel le récipient jetable est un récipient biodégradable.

3. Dispositif de collecte de déchets animaux selon la revendication 1 ou la revendication 2, dans lequel le manchon élastique comprend un élément de manchon intérieur, un élément de manchon extérieur et au moins une feuille élastique située entre les éléments de manchon intérieur et extérieur.

4. Dispositif de collecte de déchets animaux selon la revendication 3, dans lequel l'élément intérieur du manchon comprend un tissu imperméable.

5. Dispositif de collecte de déchets animaux selon la revendication 3 ou la revendication 4, dans lequel l'au moins une feuille élastique est une paroi en plastique rigide.

6. Dispositif de collecte de déchets animaux selon l'une quelconque des revendications précédentes, dans lequel le manchon élastique comprend en outre au moins un élément magnétique.

7. Dispositif de collecte de déchets animaux selon l'une quelconque des revendications précédentes, comprenant en outre au moins un moyen de fixation prévu sur une surface extérieure du manchon élastique.
